# EUROPÄISCHE PATENTANMELDUNG

(11) **EP 2 849 010 A1**
(43) Veröffentlichungstag der Anmeldung: **18.03.2015**
(21) Anmeldenummer: 13183903.7
(22) Anmeldetag: 11.09.2013
(51) Int. Cl.: G05B 19/401, G05B 19/402, G05B 19/4093, B23Q 7/00, B25J 9/16, G01N 23/04

(54) **Verfahren und System zur Fertigung eines Werkstückes**

(71) Anmelder: Siemens Aktiengesellschaft, 80333 München (DE)
(72) Erfinder: Holz, Marc, 91058 Erlangen (DE); Fürst, Johannes, 90478 Nürnberg (DE); Hamadou, Mehdi, 91052 Erlangen (DE)

(57) **Zusammenfassung**

Die Erfindung betrifft ein Verfahren zur Fertigung eines Werkstücks (20) aus einem Rohling (12) mittels eines Werkzeuges (1a), einer Werkzeugmaschine (1), mit folgenden Verfahrensschritten:
• Platzieren des Rohlings (12) in einen mobilen Arbeitsraum (10), wobei der Arbeitsraum (10) eine Spannvorrichtung (11) aufweist,
• Einspannen des Rohlings (12) in die Spannvorrichtung (11),
• Generieren von 3D-Volumen-Istdaten des Rohlings (12) und des Arbeitsraumes (10), wobei
• ein Ist-Datensatzes (41) von 3D-Volumendaten des Rohlings (12) und des Arbeitsraumes (10) folgendermaßen bestimmt wird,
der mobile Arbeitsraum (10) wird in eine Messvorrichtung (3) eingebracht, in der Messvorrichtung (3) werden der Rohling (12) und der Arbeitsraum (10) mittels industrieller Computertomographie vermessen,
• der Ist-Datensatz (41) wird mit einem Plan-Datensatz (21) verglichen, wobei der Plan-Datensatz (21) Konstruktionsdaten des zu fertigenden Werkstücks (20) und einer geplanten Aufspannsituation des Werkstückes (20) im Arbeitsraum (10) aufweist,
• durch den Vergleich wird ein Delta-Datensatz (51) ermittelt, welcher eine Delta-Aufspannsituation beschreibt,
• in der Werkzeugmaschine (1) wird der Delta-Datensatz (51) dazu genutzt auf den Plan-Datensatz (21) und auf Bewegungsprogrammdaten der Werkzeugmaschine (1) für das Werkzeug (1a) Einfluss zu nehmen um nach Einbringen des mobilen Arbeitsraums (10) in die Werkzeugmaschine (1) die Fertigung des Werkstückes (20) zu beginnen auch wenn die geplante Aufspannsituation von einer gemessenen Ist-Aufspannsituation abweicht.

## Beschreibung

Die Erfindung betrifft ein Verfahren zur Fertigung eines Werkstückes aus einem Rohling mittels eines Werkzeuges einer Werkzeugmaschine. Auch betrifft die Erfindung ein System zur Fertigung eines Werkstückes aus einem Rohling.

Bei der z.B. spanenden Fertigung von Werkstücken mittels einer Werkzeugmaschine wird vorzugsweise vor dem eigentlichen Eingriff eines Werkzeuges in den Rohling ein Prozess des Einmessens durchgeführt. Dieser Einmessprozess dient dazu, ein in einem Entwicklungssystem, vorzugsweise CAD/CAM-Prozess, generiertes Teileprogramm mit seinem projektierten Nullpunkt mit einem tatsächlichen realen Nullpunkt des Werkstücks abzugleichen.

Es ist Aufgabe der vorliegenden Erfindung den Prozess des Einmessens zu verbessern und damit eine Reduktion einer Einmesszeit zu erreichen.

Die Aufgabe wird durch ein Verfahren zur Fertigung eines Werkstücks aus einem Rohling mittels eines Werkzeugs einer Werkzeugmaschine dadurch gelöst, dass folgende Verfahrensschritte angewendet werden: Platzieren des Rohlings in einen mobilen Arbeitsraum, wobei der Arbeitsraum eine Spannvorrichtung aufweist, Einspannen des Rohling in die Spannvorrichtung, Generieren von 3D-Volumen-Istdaten des Rohlings und des Arbeitsraumes, wobei ein Ist-Datensatz von 3D-Volumen des Rohlings und des Arbeitsraumes folgendermaßen bestimmt wird, der mobile Arbeitsraum wird in eine Messvorrichtung eingebracht, in der Messvorrichtung wird der Rohling und der Arbeitsraum mittels industrieller Computertomografie vermessen, der Ist-Datensatz wird mit einem Plan-Datensatz verglichen, wobei der Plan-Datensatz Konstruktionsdaten des fertigen Werkstücks und einer geplanten Aufspannsituation des Werkstückes im Arbeitsraum aufweist, durch den Vergleich wird ein Delta-Datensatz ermittelt, welcher eine Delta-Aufspannsituation beschreibt, in der Werkzeugmaschine wird der Delta-Datensatz dazu genutzt, auf den Plan-Datensatz und auf Bewegungsprogrammdaten der Werkzeugmaschine für das Werkzeug Einfluss zu nehmen, um nach Einbringen des mobilen Arbeitsraumes in die Werkzeugmaschine die Fertigung des Werkstückes zu beginnen, auch wenn die geplante Spannsituation von einer gemessenen Ist-Aufspannsituation abweicht.

Durch das Verfahren, bei dem eine Werkzeugmaschine mit einem mobilen transportierbaren Arbeitsraum genutzt wird, kann der mobile Arbeitsraum mit dem aufgespannten Werkzeug und/oder Werkstück komplett als eine Komponente von der Werkzeugmaschine abgelöst werden. Dieser mobile Arbeitsraum wird sodann mittels bildgebender Verfahren, insbesondere der industriellen Computertomografie, vermessen.

Vorzugsweise wird das Vermessen des mobilen Arbeitsraums derart genutzt, dass geometrische Parameter vom Arbeitsraum, von der Werkzeugspindel und vom aufgespanntem Werkstück/Werkzeug vermessen werden und nutzbare Geometriedaten (z.B. STL, CAD-Modelle) für CAD/CAM Entwicklungssysteme errechnet werden. Zusätzlich ist es von Vorteil, dass eine Nullpunktverschiebung für die Abweichung von einer geplanten zu einer Ist-aufspannsituation ermittelt wird. Hierzu werden vorteilhafter Weise in der CAM-Programmierung für die Vermessung relevante geometrische Elemente, wie Kanten, Körper, Koordinatensystem-Ursprünge, Rohlings-Geometrie, Werkstückgeometrie, Arbeitsraum-Geometrien, entsprechend klassifiziert.

In einem weiteren vorteilhaften Verfahrensschritt werden bei der Konstruktion des zu fertigenden Werkstücks und der Festlegung der Aufspannsituation des Werkstücks im Arbeitsraum dem Plan-Datensatz bezogen auf unterschiedliche Elemente des mobilen Arbeitsraumes eindeutige Materialdaten und Computertomografie-Schwächungskoeffizienten hinzugefügt. Demnach werden die Elemente mit eindeutigen Werkstoffbeschreibungen und Computertomografie-Schwächungskoeffizienten (z.B. GG60,ST37) parametriert, so dass diese im Rahmen der Vermessung wieder identifiziert werden können. Dazu können diese Parameter neben dem eigentlichen Teileprogramm z.B. als XML-Datei an einen Rechner übertragen werden, der die Geometrien des vermessenen Arbeitsraums anhand der Messdaten aus dem bildgebenden Computertomografie-Verfahren errechnet.

Vorteilhafter Weise wird aus den gemessenen Ist-Daten die Materialart anhand der Computertomografie-Schwächungskoeffizienten durch eine Listenauswahl ermittelt. Auch kann beispielsweise ein Programmnullpunkt und z.B. Werkstückanten im realen Arbeitsraum entsprechend durch Markierungen gekennzeichnet werden, so dass diese besonderen Markierungen bzw. Referenzpunkte durch die Computertomografie ermittelt werden können.

Bei einer Computertomografie-Vermessung bewirken unterschiedliche Werkstoffe, Änderungen in der Schwächung der Bildgebung. Während einer 3D-Volumenrekonstruktion werden diese klassifizierten geometrischen Elemente und Werkstoffparametrierungen zur Identifikation und Analyse des mobilen Arbeitsraumes genutzt. Anhand dieser Analyse können Änderungen des geplanten Arbeitsraumes aus einem Entwicklungssystem mit dem realen Arbeitsraum in der Fertigungshalle ermittelt werden und Änderungen wie z.B. Verschiebungen des programmierten Nullpunktes für eine Werkzeugmaschine errechnet werden.

Darüber hinaus werden sämtliche Geometrien im realen Arbeitsraum (Rohteile, Werkzeuge, Spannvorrichtung) mit den theoretischen geplanten Geometrien verglichen. Somit können Kollisionen durch nicht in der Planung definierte Arbeitsmittel verhindert werden. Hierzu wird verfahrensgemäß mit Vorteil auf die gemessenen Ist-Daten ein Formerkennungsverfahren angewendet um Formen, welche Elemente des mobilen Arbeitsraumes sind, wieder zu erkennen und daraus zusätzlich ableiten zu können, ob das Element an einer Position angeordnet ist, wie sie aus dem Plan-Datensatz vorgegeben ist oder ob die aufgrund der Formerkennung erkannte Position von der geplanten Position abweicht.

Mit Vorteil wird aus den Ist-Daten ein Maschinen-Nullpunkt bezogen auf ein Koordinatensystem ermittelt und ein in dem Plan-Datensatz aufgrund der Konstruktion enthaltener definierter Plan-Nullpunkt in einen auf die gemessene Ist-Aufspannsituation abgestimmten Programmier-Nullpunkt für die Fertigung des Werkstücks transformiert.

Verfahrensgemäß kann der mobile Arbeitsraum zusätzlich einen Werkzeughalter aufweisen, welcher ebenfalls vermessen wird.

Der Werkzeughalter ist beispielsweise eine Aufnahmevorrichtung für mehrere Werkzeuge, in welche die bei der Fertigung zu verwendenden Werkzeuge abgelegt sind, und gleich mitvermessen werden.

Auch wird die Aufgabe durch ein System zur Fertigung eines Werkstücks aus einem Rohling gelöst, wobei das System folgende Komponenten umfasst, eine Werkzeugmaschine ausgestaltet einen mobilen Arbeitsraum aufzunehmen, wobei der Arbeitsraum eine Spannvorrichtung aufweist, und die Spannvorrichtung ausgestaltet ist den Rohling aufzunehmen, der mobile Arbeitsraum ist weiterhin ausgestaltet mit Befestigungsmitteln, wobei die Werkzeugmaschine Gegenbefestigungsmittel aufweist, in die die Befestigungsmittel beim Einsetzen des mobilen Arbeitsraumes in die Werkzeugmaschine eingreifen, ein Entwicklungssystem zum Entwickeln des Werkstücks geeignet einen Plan-Datensatz bereitzustellen, wobei der Plan-Datensatz Konstruktionsdaten des zu fertigenden Werkstücks und einer geplanten Aufspannsituation des Werkstückes in dem Arbeitsraum aufweist, eine Messvorrichtung ausgestaltet den mobilen Arbeitsraum aufzunehmen und mittels industrieller Computertomografie zu vermessen, ein Datenaufbereitungsmittel, ausgestaltet einen Messdatensatz aus der Messvorrichtung in einen Ist-Datensatz von 3D-Volumendaten des Rohlings und des Arbeitsraumes zu generieren, ein Vergleichsmittel ausgestaltet den Ist-Datensatz mit den Plan-Datensatz zu vergleichen, weiterhin ausgestaltet durch den Vergleich einen Delta-Datensatz zu ermitteln, welche eine Delta-Aufspannsituation beschreibt, dabei steht das Vergleichsmittel über eine Datenverbindung mit der Werkzeugmaschine in Verbindung, die Werkzeugmaschine ist weiterhin dazu ausgestaltet, mit den Delta-Datensatz auf den Plan-Datensatz und auf Bewegungsprogrammdaten der Werkzeugmaschine (1) für das Werkzeug Einfluss zu nehmen um nach Einbringen des mobilen Arbeitsraumes in die Werkzeugmaschine die Fertigung des Werkstückes zu beginnen, auch wenn die geplante Aufspannsituation von einer gemessenen Ist-Aufspannsituation abweicht.

Bei der beispielsweise spanenden Fertigung von Teilen mittels Werkzeugmaschinen, wird vor dem eigentlichen Eingriff des Werkzeuges in den Rohling ein Prozess des Einmessens durchgeführt. Dieser dient dazu, ein in einem Entwicklungssystem (CAM-Prozess) generiertes Teileprogramm mit seinem projektierten Nullpunkt mit den tatsächlichen realen Nullpunkt des Werkstückes in seiner Aufspannvorrichtung abzugleichen. Ein Werkstück oder ein Rohling kann ein Maschinenbediener an nahezu einer beliebigen Stelle auf den Arbeitsraum bzw. der Spannvorrichtung einspannen. Anhand des Vermessens von Kanten, Punkten, Flächen etc. durch den Maschinenbediener wird dieser Punkt von der Werkzeugmaschinensteuerung errechnet und in Form von Nullpunkt-Verschiebungen in die Programmverarbeitung der Werkzeugmaschine übernommen. Neben dem Prozess des Einmessens vor der Fertigung existiert auch ein Verfahren des sogenannten In-Prozessmessens. Hierzu wird die Abarbeitung des Teileprogramms der Werkzeugmaschine unterbrochen und das Werkstück und/oder die Werkzeuge vermessen. Diese ermittelten Werkzeug-Parameter können in die Teileprogrammverarbeitung übernommen werden.

Die Zeitaufwände für das Einmessen und das In-Prozess-Messen werden als Nebenzeiten der Fertigung bezeichnet. Aus Sicht der Produktionsplanung ist es ein wichtiges Ziel, diese unproduktiven Zeiten zu reduzieren oder zu vermeiden.

Das Einmessen und das In-Prozess-Messen von Werkstücken und Werkzeugen lieferte bisher nur datentechnische Parameter, die sich nicht auf die geplante Ausgangsgeometrie/Aufspannsituation des Rohliegens bzw. Werkstückes, wie im CAD und CAM berechnet, zurückführen lassen. D.h., bisher konnte die Situation im Arbeitsraum nicht automatisiert mit der geplanten Aufspannsituation im CAM abgeglichen werden.

Die im CAM-System generierten Werkzeugwege beziehen sich auf die dort geplante Fertigungssituation. Auch eine Simulation, mit der die geplanten Werkzeugwege überprüft werden, bezieht sich auf die geplante Aufspannsituation. Es wäre also wünschenswert wenn geprüft werden könnte, ob die reale Aufspannsituation der geplanten Aufspannsituation entspricht bzw. noch in einem Toleranzbereich liegt. Dadurch könnten z.B. Kollisionen durch falsch montierte Vorrichtungen vermieden werden.

Bei manuell zu bedienenden Spannvorrichtungen obliegt es dem Maschinenbediener, diese richtig zu bedienen und den Rohling oder das Werkstück richtig zu positionieren. D.h. der Maschinenbediener muss sicherstellen, dass z.B. alle Spannpratzen geschlossen sind. Eine automatische Überprüfung ist z.Z. nicht möglich. Dies führt bei der Fertigung zu teils schwierigen Problemen. Eine nicht richtig geschlossene Vorrichtung kann nicht nur Qualitätsprobleme, z.B. Ratterspuren, auf der Werkstückoberfläche, sondern auch zu schweren Schäden an der Werkzeugmaschine und den Betriebsmitteln, z.B. durch Kollisionen, führen.

In manchen Situationen ist es notwendig den Rohling vor der Fertigung auf die Einhaltung der Maßtoleranzen zu überprüfen. Je nach Anwendung kann das auf der Fertigungsmaschine oder durch separate Einrichtungen erfolgen. In jedem Fall ist dies ein zeit- und kostenintensiver Arbeitsschritt. Wenn ein komplettes 3D-Volumenmodell des Rohteils in ausreichender Qualität erfasst werden kann, ist dies ausreichend. Mit diesem Modell kann ein Soll-Ist-Vergleich durchgeführt werden. So kann z.B. ein Rohteil, das die Toleranzen überschreitet und damit zu einer Kollision mit dem Werkzeug führen könnte, noch frühzeitig erkannt werden. Um all diese Nachteile zu vermeiden und einem Maschinenbediener die manuellen Arbeitsschritte zu ersparen, wurde erfindungsgemäß das System zur Fertigung eines Werkstückes mit der Merkmalskombination nach Anspruch 8 entwickelt.

Ein Entfernen bzw. Einsetzen des mobilen Arbeitsraumes aus bzw. in die Werkzeugmaschine wird vorteilhafter Weise mit einer mechanischen Vorrichtung realisiert. Diese Vorrichtung kann z.B. mit Schienen/Nuten umgesetzt werden oder generell mit Befestigungsmitteln und Gegenbefestigungsmitteln. Um ein ungenaues Andocken an der Maschine zu kompensieren, kann z.B. die reale Position mithilfe von Glasmaßstäben erfasst und anschließend verrechnet werden. Weiterhin kann im mobilen Arbeitsraum ein temporäres Werkzeugmagazin vorhanden sein, in dem die für die Bearbeitung notwendigen Werkzeuge für die Vermessung abgelegt werden. Da dies alles in einen Arbeitsgang passiert, kann nicht nur die Werkzeuglänge erkannt werden, sondern auch der Werkzeugverschleiß ermittelt werden. Sollten z.B. Risse in einem Werkzeug erkannt werden, so kann dies im Vorfeld ausnotiert werden.

Vorteilhafter Weise weist das System eine Liste mit Elementen des mobilen Arbeitsraumes auf, wobei den Elementen eindeutige Materialdaten und Computertomografie-Schwächungskoeffizienten zugeordnet sind.

Weiterhin weist das System ein Formerkennungsmodul auf, welches ausgestaltet ist, Elemente des mobilen Arbeitsraumes anhand des Ist-Datensatzes zu erkennen. Aus dieser Formerkennung kann zusätzlich abgeleitet werden, ob das Element an einer Position angeordnet ist, wie sie aus dem Plan-Datensatz vorgegeben ist oder ob die aufgrund der Formerkennung erkannte Position von der geplanten Position abweicht.

Weiterhin weist das System einen Nullpunktgenerator auf, welcher ausgestaltet ist, aus den Ist-Daten einen Maschinennullpunkt bezogen auf ein Koordinatensystem zu generieren, wobei ein in dem Plan-Datensatz aufgrund der Konstruktion enthaltener definierter Plan-Nullpunkt in einen auf die gemessene Ist-Aufspannsituation abgestimmter Programmier-Nullpunkt für die Fertigung des Werkstückes transformiert wird.

Anhand der Zeichnung wird ein Ausführungsbeispiel für einen mobilen Arbeitsraum einer Werkzeugmaschine aufgezeigt. Es zeigt die
- FIG 1: eine Werkzeugmaschine mit einem herausnehmbaren bzw. wieder einsetzbaren mobilen Arbeitsraum,
- FIG 2: die Werkzeugmaschine mit dem mobilen Arbeitsraum und einem Transportweg zu einer Messvorrichtung und
- FIG 3: ein System zum Fertigen eines Werkstückes.

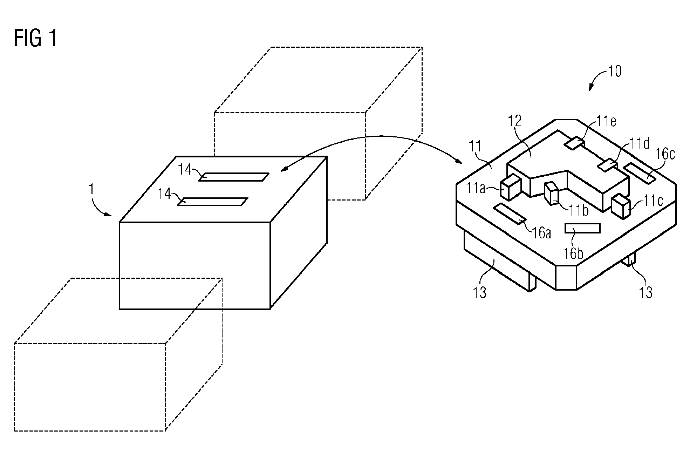

Gemäß der FIG 1 ist eine Werkzeugmaschine 1 mit einem herausnehmbaren bzw. wiedereinsetzbaren mobilen Arbeitsraum 10 dargestellt. Die Werkzeugmaschine 1 befindet sich in einer Reihe von mehreren weiteren Werkzeugmaschinen, welche durch gestrichelte Kästchen angedeutet. Bei Anwendung des Verfahrens nach Anspruch 1 bietet das den Vorteil, dass eine Messvorrichtung für eine Vielzahl von Werkzeugmaschinen genutzt werden kann. Durch den herausnehmbaren bzw. wiedereinsetzbaren mobilen Arbeitsraum 10 der Werkzeugmaschine 1 kann ein automatisiertes Fertigen von Werkstücken erleichtert werden und unproduktive Zeiten, welche z.B. für Einmessvorgänge gebraucht werden, können reduziert werden.

Der mobile Arbeitsraum 10 weist eine Spannvorrichtung 11 auf, in die ein zu bearbeitender Rohling 12 eingespannt ist. Die Spannvorrichtung 11 ist derart ausgestaltet, dass sie beispielsweise über eine Lochmatrix Spannpratzen aufnehmen kann. Gemäß der FIG 1 sind diese Spannpratzen als ein erstes Spannelement 11a, ein zweites Spannelement 11b, ein drittes Spannelement 11c, ein viertes Spannelement 11d und ein fünftes Spannelement 11e ausgeführt. Die Spannelemente 11a,...,11e sorgen für einen festen Sitz des Rohlings 12 auf der Spannvorrichtung 11.

Damit der mobile Arbeitsraum 10 in der Werkzeugmaschine sicher und genau positioniert werden kann, weist der mobile Arbeitsraum 10 Befestigungsmittel 13 auf. Diese Befestigungsmittel 13 können in Gegenbefestigungsmittel 14 der Werkzeugmaschine 1 einrasten.

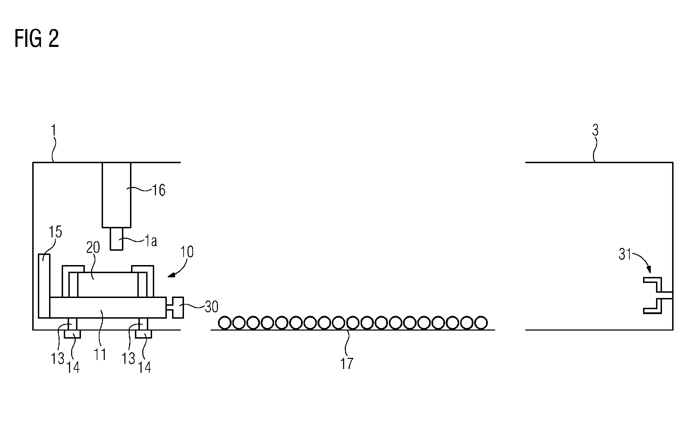

Mit der FIG 2 wird gezeigt, wie der mobile Arbeitsraum 10 aus der Werkzeugmaschine 1 in eine Messvorrichtung 3 automatisiert transportiert werden kann. Durch Lösen der Befestigungsmittel 13 auf den Gegenbefestigungsmittel 14 der Werkzeugmaschine 1 kann der mobile Arbeitsraum 10 der Werkzeugmaschine 1 entfernt werden und über ein Transportband 17 automatisiert der Messeinrichtung 3 zugeführt werden. Die Messvorrichtung 3 ist ausgestaltet den mobilen Arbeitsraum 10 aufzunehmen und mittels industrieller Computertomografie zu vermessen. Um ein genaues Positionieren des mobilen Arbeitsraumes 10 in der Messvorrichtung 3 zu gewährleisten, weist der mobile Arbeitsraum 10 eine Positioniervorrichtung 30 auf, welche in ein Positioniergegenstück 31 der Messvorrichtung 4 eingeführt wird.

Die Werkzeugmaschine 1 ist mit einer Spindel 16, welche ein Werkzeug 1a zur Bearbeitung des Werkstückes 20 trägt, ausgerüstet. Auch kann der mobile Arbeitsraum 10 zusätzlich einen Werkzeughalter 15 aufweisen.

Um der Messvorrichtung 3 gegebenenfalls Referenzpunkte für ein genaueres Vermessen zu geben, weist der mobile Arbeitsraum 10 (siehe FIG 1) zusätzlich eine erste Markierung 16a, eine zweite Markierung 16b und eine dritte Markierung 16c auf. Diese Markierungen 16a,16b,16c sind aus einen speziellen Material, welches für das bildgebende Verfahren der industriellen Computertomografie besonders sichtbar ist.

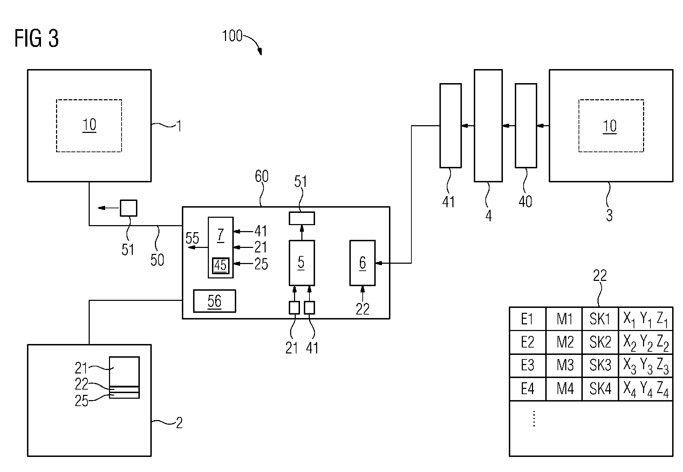

Mit der FIG 3 ist ein System 100 zur Fertigung eines Werkstückes zusammengestellt aus unterschiedlichen Komponenten abgebildet. Die Werkzeugmaschine 1 kann den mobilen Arbeitsraum 10 aufnehmen, aber auch die Messvorrichtung 3 kann den mobilen Arbeitsraum 10 aufnehmen, daher ist der mobile Arbeitsraum 10 gestrichelt eingezeichnet. Das System 100 zur Fertigung des Werkstückes 20 aus einen Rohling 12 umfasst die Werkzeugmaschine 1, ein Entwicklungssystem 2, die Messvorrichtung 3 und eine Recheneinheit 60.

Die Werkzeugmaschine 1 ist ausgestaltet den mobilen Arbeitsraum 10 aufzunehmen, wobei der mobile Arbeitsraum 10 die Spannvorrichtung 11 aufweist, und die Spannvorrichtung 11 ist ausgestaltet den Rohling 12 aufzunehmen, der mobile Arbeitsraum 10 ist weiterhin ausgestaltet, mit Befestigungsmitteln 13, wobei die Werkzeugmaschine 1 Gegenbefestigungsmittel 14 aufweist, in die die Befestigungsmittel 13 beim Einsetzen des mobilen Arbeitsraums 10 in die Werkzeugmaschine 1 eingreifen (siehe FIG 1).

Das Entwicklungssystem 2 zum Entwickeln des Werkstücks 20 ist geeignet einen Plan-Datensatz 21 bereitzustellen, wobei der Plan-Datensatz 21 Konstruktionsdaten des zu fertigenden Werkstücks 20 und einer geplanten Aufspannsituation des Werkstückes 20 in den mobilen Arbeitsraum 10 aufweist.

Die Messvorrichtung 3 ist ausgestaltet den mobilen Arbeitsraum 10 aufzunehmen und mittels industrieller Computertomografie zu vermessen. Weiterhin ist der Messvorrichtung 3 ein Datenaufbereitungsmittel 4 zugeordnet, welches ausgestaltet ist, einen Messdatensatz 40 aus der Messvorrichtung 3 in einen Ist-Datensatz 41 von 3D-Volumendaten des Rohlings 12 und des Arbeitsraumes 10 zu generieren.

Die Recheneinheit 60 weist ein Vergleichsmittel 5 auf, welches ausgestaltet ist, den Ist-Datensatz 41 mit dem Plan-Datensatz 21 des Entwicklungssystems 2 zu vergleichen. Weiterhin ist das Vergleichsmittel 5 dazu ausgestaltet, durch den Vergleich einen Delta-Datensatz 51 zu ermitteln, welcher eine Delta-Aufspannsituation beschreibt. Dabei steht das Vergleichsmittel 5 über eine Datenverbindung 50 mit der Werkzeugmaschine 1 in Verbindung.

Die Werkzeugmaschine 1 ist weiterhin dazu ausgestaltet, mit dem Delta-Datensatz 51 auf den Plan-Datensatz 21 und auf Bewegungsprogrammdaten des Werkzeuges 1a Einfluss zu nehmen und nach Einbringen des mobilen Arbeitsraumes 10 in die Werkzeugmaschine 1 die Fertigung des Werkstückes 20 zu beginnen auch wenn die geplante Aufspannsituation von einer gemessenen Ist-Aufspannsituation abweicht.

Zum Erzielen von besseren Ergebnissen weist die Recheneinheit 60 zusätzlich ein Formerkennungsmodul 6 auf, wobei der Ist-Datensatz 41 aus der Messvorrichtung 3 dem Formerkennungsmodul 6 als Eingangsgröße zugeleitet wird, eine weitere Eingangsgröße für das Formerkennungsmodul ist eine Liste 22. Die Liste 22 enthält eine Beschreibungsdatei für Elemente E1,...,E4, wie sie beispielsweise auf dem mobilen Arbeitsraum 10 durch das Entwicklungssystem 2 geplant sind. Die Elemente E1,...,E4 sind jeweils durch einen ersten Materialparameter M1, einem zweiten Materialparameter M2, einem dritten Materialparameter M3 und einem vierten Materialparameter M4 und durch die Hinzunahme von Computertomografie-Schwächungskoeffizienten, nämlich einen ersten Schwächungskoeffizient SK1, einen zweiten Schwächungskoeffizient SK2, einen dritten Schwächungskoeffizient SK3 und einen vierten Schwächungskoeffizient SK4 beschrieben. Die Koordinaten X,Y,Z beschreiben die geplante Position der Elemente E1,...,E4 nach den Vorgaben des Entwicklungssystems 2.

In dem Entwicklungssystem 2 wird nicht nur der Plan-Datensatz 21 für die Recheneinheit 60 bereitgestellt sondern auch die Liste 22 und ein Plan-Nullpunkt 25.

Einem Nullpunktgenerator 7 werden als Eingangsgrößen der Plan-Datensatz 21, der Ist-Datensatz 41 und der Plan-Nullpunkt 25 zugeführt, wobei der Nullpunkt-Generator 7 unter Zuhilfenahme eines Maschinen-Nullpunktes 45 einen Programmier-Nullpunkt 55 errechnet. Über eine Datenverbindung 50, welche zwischen der Werkzeugmaschine 1 und der Recheneinheit 60 besteht, kann der Werkzeugmaschine 1 der Delta-Datensatz 51 und der Programmier-Nullpunkt 55 übermittelt werden. Die Werkzeugmaschine 1 kann mit der Fertigung des Werkstückes 20 beginnen, auch wenn die geplante Aufspannsituation von der gemessenen Ist-Aufspannsituation abweicht, da sie mittels des Delta-Datensatzes 51 und des transformierten Programmier-Nullpunktes 55 ihre zuvor programmierten Bewegungsabläufe nun an die Ist-Aufspannsituation anpasst.

Die Recheneinheit 60 weist zusätzlich Toleranzvorgaben 56 auf. Sollten diese Toleranzvorgaben 56 überschritten werden, welches bedeutet, eine Übermittlung eines Delta-Datensatzes 51 mit überschrittenen Toleranzen an die Werkzeugmaschine 1 wäre sinnlos, da diese die Korrektur nicht mehr vornehmen kann, weil sie beispielsweise außerhalb von möglichen maximalen oder minimalen Bewegungsabläufen des Werkzeuges 1a liegt. Werden die Toleranzvorgaben 56 überschritten, so wird dem Entwicklungssystem 2 dieses mitgeteilt und ein Entwickler muss an dem Entwicklungssystem 2 eine Korrektur vornehmen.

## Patentansprüche

1. Verfahren zur Fertigung eines Werkstücks (20) aus einem Rohling (12) mittels eines Werkzeuges (1a), einer Werkzeugmaschine (1), mit folgenden Verfahrensschritten:
• Platzieren des Rohlings (12) in einen mobilen Arbeitstraum (10), wobei der Arbeitsraum (10) eine Spannvorrichtung (11) aufweist,
• Einspannen des Rohlings (12) in die Spannvorrichtung (11),
• Generieren von 3D-Volumen-Istdaten des Rohlings (12) und des Arbeitsraumes (10), wobei
• ein Ist-Datensatzes (41) von 3D-Volumendaten des Rohlings (12) und des Arbeitsraumes (10) folgendermaßen bestimmt wird,
der mobile Arbeitsraum (10) wird in eine Messvorrichtung (3) eingebracht, in der Messvorrichtung (3) werden der Rohling (12) und der Arbeitsraum (10) mittels industrieller Computertomographie vermessen,
• der Ist-Datensatz (41) wird mit einem Plan-Datensatz (21) verglichen, wobei der Plan-Datensatz (21) Konstruktionsdaten des zu fertigenden Werkstücks (20) und einer geplanten Aufspannsituation des Werkstückes (20) im Arbeitsraum (10) aufweist,
• durch den Vergleich wird ein Delta-Datensatz (51) ermittelt, welcher eine Delta-Aufspannsituation beschreibt,
• in der Werkzeugmaschine (1) wird der Delta-Datensatz (51) dazu genutzt auf den Plan-Datensatz (21) und auf Bewegungsprogrammdaten der Werkzeugmaschine (1) für das Werkzeug (1a) Einfluss zu nehmen um nach Einbringen des mobilen Arbeitsraums (10) in die Werkzeugmaschine (1) die Fertigung des Werkstückes (20) zu beginnen auch wenn die geplante Aufspannsituation von einer gemessenen Ist-Aufspannsituation abweicht.

2. Verfahren nach Anspruch 1, wobei bei der Konstruktion des zu fertigenden Werkstücks (20) und der Festlegung der Aufspannsituation des Werkstückes (20) im Arbeitsraum (10), dem Plan-Datensatz (21) bezogen auf unterschiedliche Elemente des mobilen Arbeitstraumes (10) eindeutige Materialdaten (M1,...,M4) und Computertomographie-Schwächungskoeffizienten (SK1,...,SK4) hinzugefügt werden.

3. Verfahren nach Anspruch 2, wobei aus den gemessenen Ist-Daten die Materialart anhand der Computertomographie-Schwächungskoeffizienten (SK1,...,SK4) durch eine Listenauswahl ermittelt wird.

4. Verfahren nach einem der Ansprüche 1 bis 3, wobei auf die gemessenen Ist-Daten ein Formerkennungsverfahren angewendet wird um Formen, welche Elemente des mobilen Arbeitsraumes (10) sind wieder zu Erkennen und daraus zusätzlich abgeleitet werden kann, ob das Element an einer Position angeordnet ist, wie sie aus dem Plan-Datensatz (41) vorgegeben ist oder ob die aufgrund der Formerkennung erkannte Position von der geplanten Position abweicht.

5. Verfahren nach einem der Ansprüche 1 bis 4, wobei aus den Ist-Daten ein Maschinen-Nullpunkt (45) bezogen auf ein Koordinatensystem ermittelt wird und ein in dem Plan-Datensatz (21) aufgrund der Konstruktion enthaltener definierter Plan-Nullpunkt (25) in einen auf die gemessene Ist-Aufspannsituation abgestimmten Programmier-Nullpunkt (55) für die Fertigung des Werkstücks (20) transformiert wird.

6. Verfahren nach einem der Ansprüche 1 bis 5, wobei der mobile Arbeitstraum (10) zusätzlich einen Werkzeughalter (15) aufweist.

7. Verfahren nach einem der Ansprüche 1 bis 6, wobei im mobilen Arbeitsraum (10) Markierungen (16a,16b,16c) eingebracht werden, welche durch die Computertomographie sicher erkannt werden.

8. System (100) zur Fertigung eines Werkstücks (20) aus einem Rohling (12) umfassend,
eine Werkzeugmaschine (1) ausgestaltet einen mobilen Arbeitsraum (10) aufzunehmen, wobei der Arbeitsraum (10) eine Spannvorrichtung (11) aufweist, und die Spannvorrichtung (11) ausgestaltet ist den Rohling (12) aufzunehmen,
der mobile Arbeitsraum (10) ist weiterhin ausgestaltet mit Befestigungsmitteln (13), wobei die Werkzeugmaschine Gegenbefestigungsmittel (14) aufweist, in die die Befestigungsmittel (13) beim Einsetzen des mobilen Arbeitsraumes (10) in die Werkzeugmaschine (1) eingreifen,
ein Entwicklungssystem (2) zum Entwickeln des Werkstücks (20) geeignet einen Plan-Datensatz (21) bereitzustellen,
wobei der Plan-Datensatz (21) Konstruktionsdaten des zu fertigenden Werkstücks (20) und einer geplanten Aufspannsituation des Werkstückes (20) in dem Arbeitsraum (10) aufweist, eine Messvorrichtung (3) ausgestaltet den mobilen Arbeitsraum (10) aufzunehmen und mittels industrieller Computertomographie zu vermessen,
ein Datenaufbereitungsmittel (4) ausgestaltet einen Messdatensatz (40) aus der Messvorrichtung (3) in einen Ist-Datensatz (41) von 3D-Volumendaten des Rohlings (12) und des Arbeitsraumes (10) zu generieren,
ein Vergleichsmittel (5) ausgestaltet den Ist-Datensatz (41) mit dem Plan-Datensatz (21) zu vergleichen, weiterhin ausgestaltet durch den Vergleich einen Delta-Datensatz (51) zu ermitteln, welcher eine Delta-Aufspannsituation beschreibt, dabei steht das Vergleichsmittel über eine Datenverbindung (50) mit der Werkzeugmaschine (1) in Verbindung, die Werkzeugmaschine (1) ist weiterhin dazu ausgestaltet mit dem Delta-Datensatz (51) auf den Plan-Datensatz (21) und auf Bewegungsprogrammdaten der Werkzeugmaschine (1) für ein Werkzeug (1a) Einfluss zu nehmen um nach Einbringen des mobilen Arbeitsraumes (10) in die Werkzeugmaschine (1) die Fertigung des Werkstückes (20) zu beginnen auch wenn die geplante Aufspannsituation von einer gemessenen Ist-Aufspannsituation abweicht.

9. System (100) nach Anspruch 8, aufweisend eine Liste (22) mit Elementen des mobilen Arbeitstraumes (10), wobei den Elementen eindeutige Materialdaten (M1,...,M4) und Computertomographie-Schwächungskoeffizienten (SK1,...,SK4) zugeordnet sind.

10. System (100) nach Anspruch 8 oder 9, aufweisend ein Formerkennungsmodul (6), welches ausgestaltet ist Elemente des mobilen Arbeitstraumes (10) anhand des Ist-Datensatzes (41) zu Erkennen.

11. System (100) nach einem der Ansprüche 8 bis 10, aufweisend einen Nullpunktgenerator (7), welcher ausgestaltet aus den Ist-Daten einen Maschinen-Nullpunkt (45) bezogen auf ein Koordinatensystem zu generieren, wobei ein in dem Plan-Datensatz (21) aufgrund der Konstruktion enthaltener definierter Plan-Nullpunkt (25) in einen auf die gemessene Ist-Aufspannsituation abgestimmten Programmier-Nullpunkt (55) für die Fertigung des Werkstücks (20) transformiert wird.
